# EUROPEAN PATENT APPLICATION

(11) **EP 3 081 101 A1**
(43) Date of publication of application: **19.10.2016**
(21) Application number: 13899265.6
(22) Date of filing: 25.12.2013
(51) Int. Cl.: A24F 47/00

(54) **ELECTRONIC CIGARETTE, ATOMISER AND CONNECTOR THEREOF**

(30) Priority: 10.12.2013 CN 201320809249 U
(71) Applicant: Kimree Hi-Tech Inc, Road Town, Tortola (VG)
(72) Inventor: LIU, Qiuming, Huizhou Guangdong 516000 (CN)
(74) Representative: Ipside
(86) International application number: PCT/CN2013/090403
(87) International publication number: WO 2015/085630

(57) **Abstract**

A connector of an electronic cigarette, comprising a first connecting end (1) capable of being fixedly connected to a battery rod of an electronic cigarette, and a second connecting end (4) capable of being fixedly connected to an atomiser of the electronic cigarette. The first connecting end (1) is in a detachable snap fit with the battery rod. An easy-break groove (2) arranged along the circumference of the connector is provided at the junction of the first connecting end (1) and the second connecting end (4). The easy-break groove allows the connector to be broken easily, so that when the connector is broken and extracted, oil-storage cotton is not pulled out and does not contaminate people's clothes or skin. Also disclosed are an atomiser and an electronic cigarette comprising the present connector.

## Description

The present application claims the benefit of priority to Chinese patent application No. 201320809249.8 titled "ELECTRONIC CIGARETTE, ATOMIZER AND CONNECTOR THEREOF", filed with the Chinese State Intellectual Property Office on December 10, 2013, the entire disclosure of which is incorporated herein by reference.

### FIELD

The present application relates to the technical field of electronic cigarettes, and particularly relates to an electronic cigarette, an atomizer and a connector thereof.

### BACKGROUND

An electronic cigarette, also known as a virtual cigarette, can atomize, by heating, liquid of tobacco flavor to smoke-like state to be smoked by a smoker, and is mainly used for smoking cessation or cigarette substitution. The electronic cigarette has the same appearance and similar flavor as the cigarette. Since the electronic cigarette does not contain harmful ingredients in the cigarette, such as tar, suspended particles, and etc., and does not generate diffused or smoky second-hand smoke, thus the electronic cigarette is very popular.

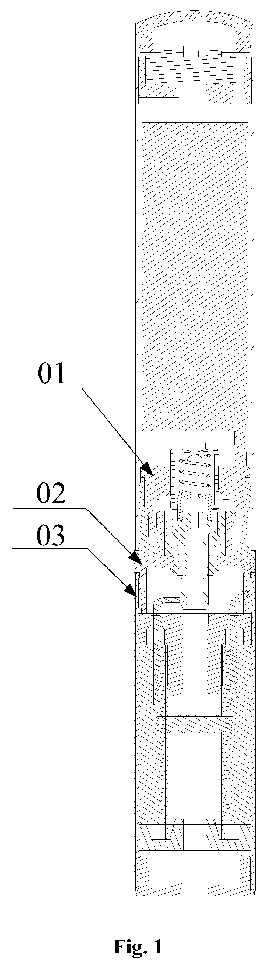

In the structural design of the electronic cigarette, as shown in Figure 1, the electronic cigarette has a battery rod 01 and an atomizer 03 which are connected via a connector. The connector 02 includes two connecting ends, one connecting end is fixedly connected to the battery rod 01 and the other connecting end is fixedly connected to the atomizer 03, thus the atomizer 03 is detachably connected to the battery rod 01. After an electronic cigarette is used, generally, the connector of the used electronic cigarette will be broken off for avoiding it being reused by someone else. However, in the conventional technology, the connector can not be easily broken off, and if an excessive force is exerted, an end of the connector that fits with the atomizer with an interference fit may be pulled out together with a liquid storage cotton, and the liquid contained in the liquid storage cotton may dirty clothes or skin of a user.

In view of this, a technical problem to be solved presently by those skilled in the art is to solve the problem that the connector of the electronic cigarette cannot be easily broken off.

### SUMMARY

In view of this, a first object of the present application is to provide a connector of an electronic cigarette having a structural design which may solve the problem that the connector of the electronic cigarette cannot be easily broken off. A second object of the present application is to provide an atomizer including the connector. A third object of the preset application is to provide an electronic cigarette including the connector.

For achieving the first object, the following technical solutions are provided according to the present application.

A connector of an electronic cigarette includes a first connecting end configured to be fixedly connected to a battery rod of the electronic cigarette, and a second connecting end configured to be fixedly connected to an atomizer of the electronic cigarette, and the first connecting end is configured to be detachably connected to the battery rod, and an easy-break groove is provided at a connecting portion of the first connecting end and the second connecting end along a circumferential direction of the connector.

Preferably, in the connector of the electronic cigarette, the easy-break groove is provided on an outer wall of the connecting portion of the first connecting end and the second connecting end.

Preferably, in the connector of the electronic cigarette, the connector is provided with a through hole extending along an axial direction of the connector and extending through the first connecting end and the second connecting end.

Preferably, in the connector of the electronic cigarette, a bottom wall of the easy-break groove is provided with a through hole in communication with the through hole.

Preferably, in the connector of the electronic cigarette, a bottom wall of the easy-break groove has a thickness ranging from 0.08mm to 0.12mm.

Preferably, in the connector of the electronic cigarette, the connector is provided with a through hole extending along an axial direction of the connector and extending through the first connecting end and the second connecting end, and an inner wall of the connecting portion of the second connecting end and the first connecting end is provided with a protruding annular end wall, and the easy-break groove is provided on the end wall.

Preferably, in the connector of the electronic cigarette, the easy-break groove is provided on a side of the end wall that is away from the first connecting end.

Preferably, in the connector of the electronic cigarette, the easy-break groove has an annular shape or an arc shape.

An atomizer is configured to form an electronic cigarette in combination with a battery rod, wherein one end of the atomizer is provided with a connector configured to be connected to the battery rod, and the connector is the connector according to any one of the above technical solutions.

A cigarette includes an atomizer and a battery rod detachably connected to the atomizer, wherein the atomizer and the battery rod are connected via the connector according to any one of the above technical solutions.

The connector of the electronic cigarette according to the present application includes a first connecting end configured to be fixedly connected to a battery rod of the electronic cigarette, and a second connecting end configured to be fixedly connected to an atomizer of the electronic cigarette, wherein the first connecting end is configured to be detachably connected to the battery rod, and an easy-break groove is provided at a connecting portion of the first connecting end and the second connecting end along a circumferential direction of the connector, i.e., a groove is provided at the connecting portion of the first connecting end and the second connecting end. With such arrangement, a wall of the connecting portion of the first connecting end and the second connecting end has a reduced thickness due to the easy-break groove, and correspondingly, the strength of the wall is reduced, thus the wall may be easily broken off. Thus, when a user needs to break off the connector, the connector may be more easily broken off, which avoids the connector being pulled out by an excessive force together with a liquid storage cotton, and avoids clothes or skin of the user being dirtied by the liquid storage cotton.

For achieving the second object, an atomizer and an electronic cigarette are further provided according to the present application. The atomizer and the electronic cigarette both include the connector according to any one of the above embodiments. Since the connector has the above technical effects, the atomizer and the electronic cigarette both including the connector also has corresponding technical effects.

### BRIEF DESCRIPTION OF THE DRAWINGS

In order to more clearly illustrate the embodiments of the present application or the technical solution in the conventional technology, drawings referred to describe the embodiments or the conventional technology will be briefly described hereinafter. Apparently, the drawings in the following description are only several embodiments of the present application, and for those skilled in the art, other drawings may be obtained based on these drawings without any creative work.
Figure 1 is a schematic view showing the assembling structure of a connector in the conventional technology;
Figure 2 is a front view of a connector according to a first embodiment of the preset application;
Figure 3 is a sectional view taking along line a-a of Figure 2;
Figure 4 is a schematic view showing the structure of the connector according to the first embodiment of the preset application;
Figure 5 is a front view of a connector according to a second embodiment of the preset application;
Figure 6 is a sectional view taken along line b-b of Figure 5;
Figure 7 is a schematic view showing the assembling structure of the connector according to the present application; and

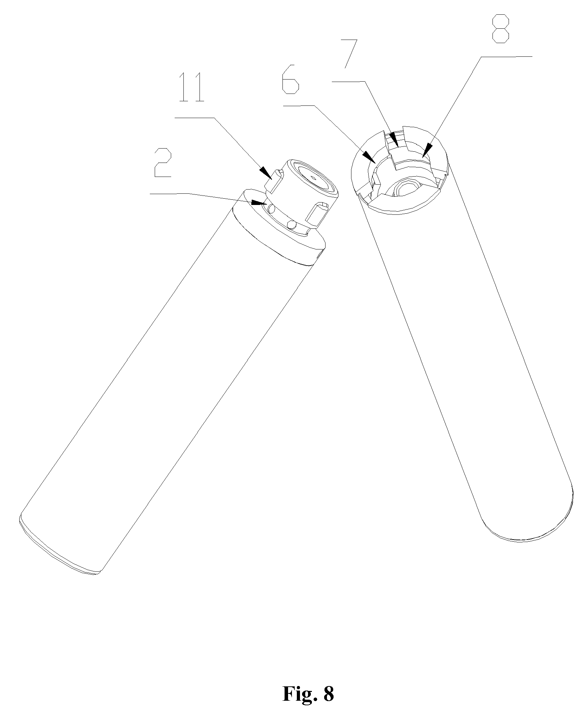

Figure 8 is a schematic view of an electronic cigarette according to the present application, with a battery rod and an atomizer being disengaged from each other.

**Reference Numerals:**

| | | | | | |
|---|---|---|---|---|---|
| 01 | battery rod, | 02 | connector, | 03 | atomizer; |
| 1 | first connecting end, | 11 | retaining portion, | 2 | easy-break groove, |
| 21 | through hole, | 3 | stopping portion, | 4 | second connecting end, |
| 5 | through hole, | 6 | insertion groove, | 7 | guide groove, |
| 8 | retaining groove; | | | | |
| A | battery rod, | B | connector, and | C | atomizer. |

### DETAILED DESCRIPTION

A first object of the present application is to provide a connector of an electronic cigarette having a structural design which may solve the problem that the connector of the electronic cigarette cannot be easily broken off. A second object of the present application is to provide an atomizer including the connector. A third object of the preset application is to provide an electronic cigarette including the connector.

The technical solutions in the embodiments of the present application will be described clearly and completely hereinafter in conjunction with the drawings in the embodiments of the present application. Apparently, the described embodiments are only a part of the embodiments of the present application, rather than all embodiments. Based on the embodiments in the present application, all of other embodiments, made by the person skilled in the art without any creative efforts, fall into the protection scope of the present application.

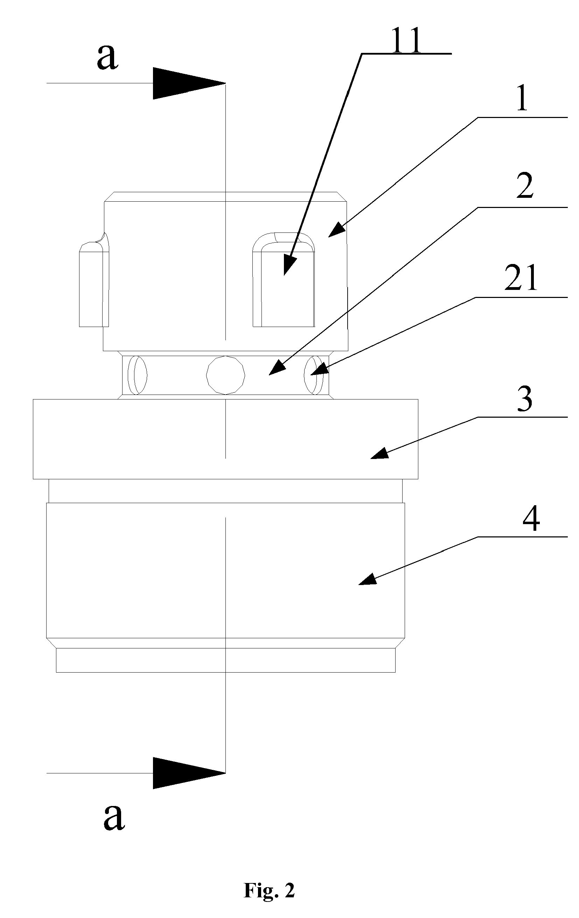

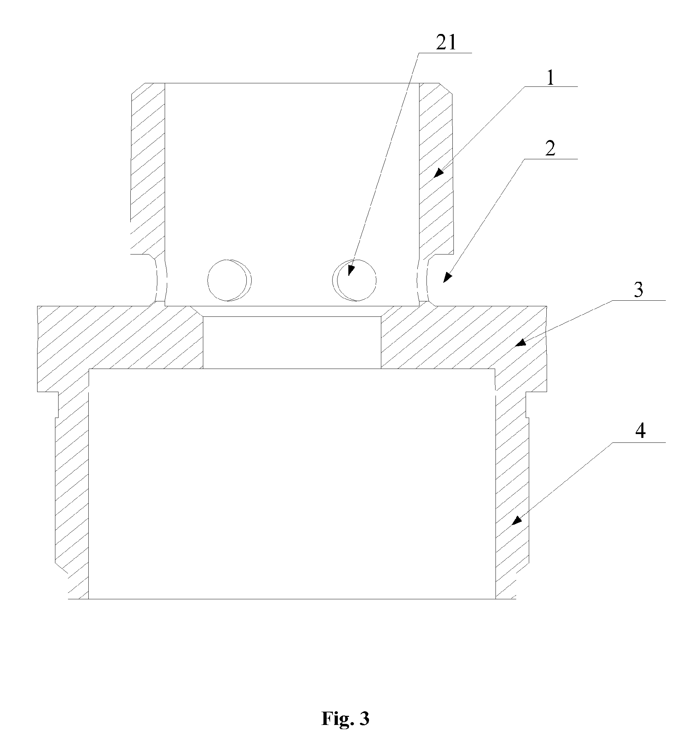

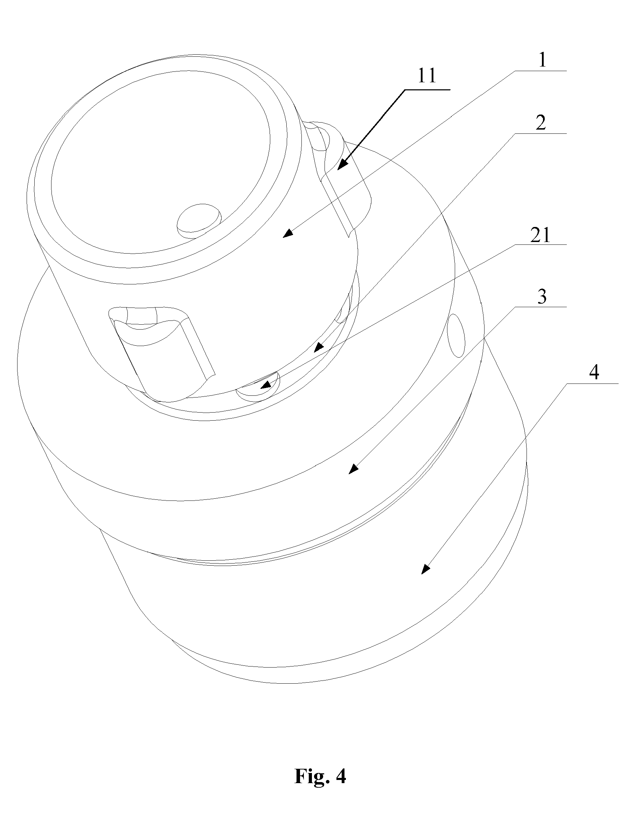

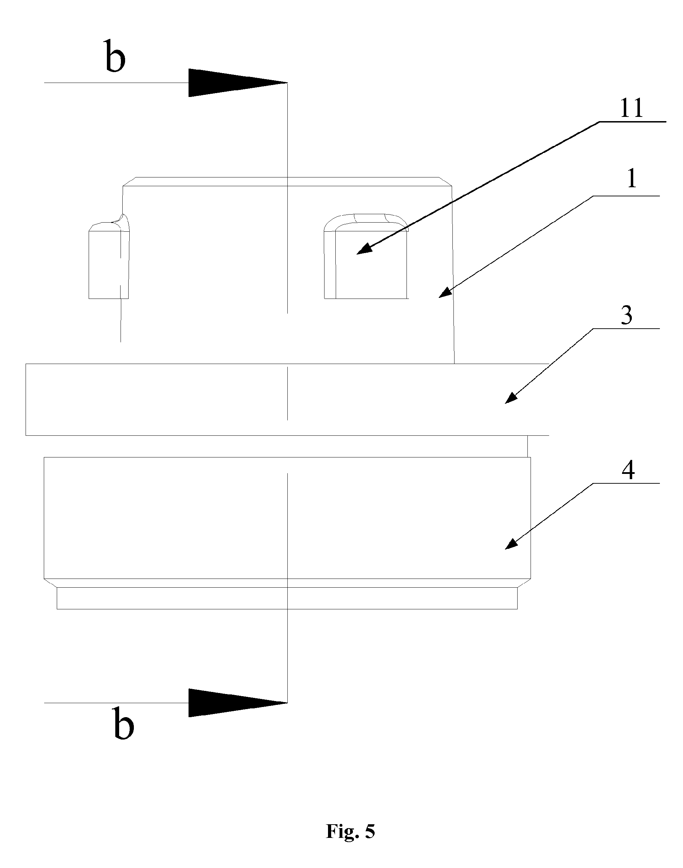

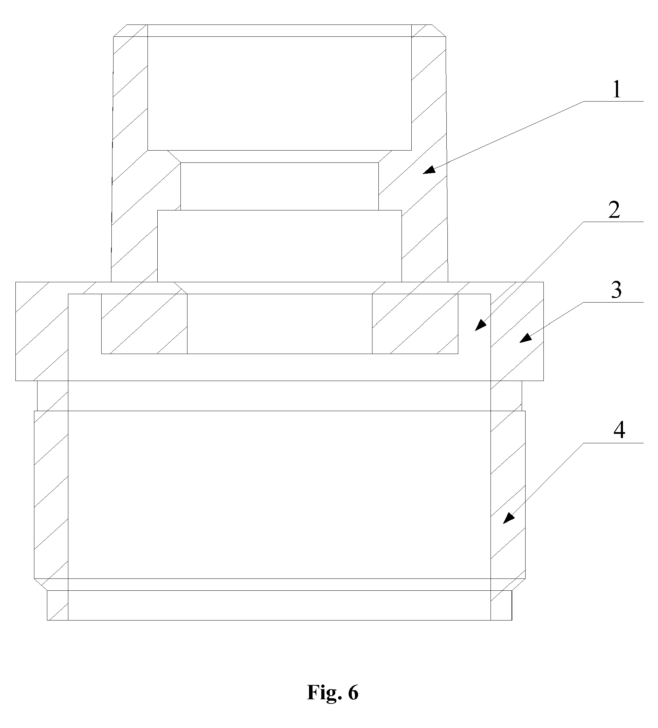

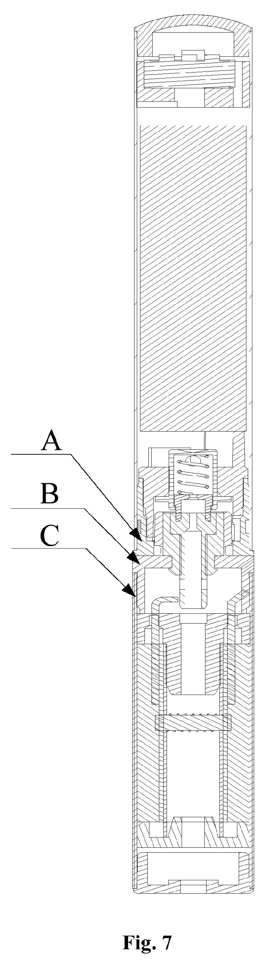

Reference is made to Figures 2 to 7. A connector of an electronic cigarette according to the present application includes a first connecting end 1 and a second connecting end 4. The first connecting end 1 is configured to be fixedly connected to a battery rod A of the electronic cigarette, and the second connecting end 4 is configured to be fixedly connected to an atomizer of the electronic cigarette. The first connecting end 1 may be detachably connected to the battery rod A. An easy-break groove 2 is provided at a connecting portion of the first connecting end 1 and the second connecting end 4 in a circumferential direction of a connector B, i.e. a groove is provided at the connecting portion of the first connecting end 1 and the second connecting end 4. With such arrangement, a wall of the connecting portion of the first connecting end 1 and the second connecting end 4 has a reduced thickness due to the easy-break groove 2, and correspondingly, the strength of the wall is reduced, thus the wall may be easily broken off. Thus, when a user needs to break off the connector B, the connector B may be more easily broken off, which avoids the connector B being pulled out by an excessive force together with a liquid storage cotton, and avoids clothes or skin of the user being dirtied by the liquid storage cotton. In this embodiment, the second connecting end 4 may be connected to an atomizer C of the electronic cigarette with an interference fit, and the second connecting end 4 may also be connected to the atomizer C of the electronic cigarette in a detachable manner, such as threaded connection. The first connecting end 1 is provided with multiple retaining portions 11, and the battery rod A is provided with multiple retaining grooves 8 corresponding to the retaining portions 11. The retaining portions 11 may slide into and out of the retaining grooves 8, thereby achieving a detachable connection between the first connecting end 1 and the battery rod A.

In a practical application, the first connecting end 1 is fixedly connected to the atomizer C of the electronic cigarette, the second connecting end 4 is also fixedly connected to the battery rod A of the electronic cigarette, and correspondingly, the first connecting end 1 is detachably connected to the atomizer C of the electronic cigarette, and the second connecting end 4 may also be detachably connected to the battery rod A of the electronic cigarette.

In an embodiment of the present application, the easy-break groove 2 may be provided on an outer wall of the connecting portion of the first connecting end 1 and the second connecting end 4, which may facilitate the manufacture. Apparently, the easy-break groove 2 may also be provided inside the connecting portion of the first connecting end 1 and the second connecting end 4, and the position of the easy-break groove 2 is not limited herein.

Furthermore, the connector B is further provided with a through hole 5 extending in an axial direction of the connector B and extending through the first connecting end 1 and the second connecting end 4. The easy-break groove 2 may be provided on the inner wall or the outer wall of the connecting portion of the first connecting end 1 and the second connecting end 4. The easy-break groove 2 may have an arc-shaped or U-shaped structure, which is not limited herein. Due to the through hole 5, the connector B may be more easily broken off along the easy-break groove 2. Optionally, the through hole 5 may not be provided, which is not limited here.

For further reducing the strength of the connector B at the easy-break groove 2, a bottom wall of the easy-break groove 2 may be provided with a through hole 21. Multiple through holes 21 may be distributed along in a circumferential direction of the connector B, and the through hole 21 may be a circular hole or a square hole, which is not limited herein.

Preferably, for facilitating breaking the connector B along the easy-break groove 2, the bottom wall of the easy-break groove 2 is configured to have a thickness ranging from 0.08mm to 0.12mm, and specifically the thickness may be 0.1mm.

In another embodiment of the present application, the connector B is also provided with a through hole 5 extending in an axial direction of the connector B and extending through the first connecting end 1 and the second connecting end 4, and the inner wall of the connecting portion of the second connecting end 4 and the first connecting end 1 is provided with a protruding annular end wall, and the easy-break groove 2 is provided on the end wall. With such arrangement, the strength of the connector B at the easy-break groove 2 is significantly reduced, which facilitates breaking the connector B. The annular end wall protrudes towards an axis of the connector B. Further, the easy-break groove 2 is provided on a side of the end wall that is away from the first connecting end 1, i.e., an open end of the easy-break groove 2 faces the second connecting end 4. Optionally, the open end of the easy-break groove 2 may also face the first connecting end 1 or the axis of the connector B, which is not limited herein.

Further, each of the end wall and the out wall of the connecting portion of the first connecting end 1 and the second connecting end 4 may be provided with the easy-break groove 2 at the same time, which is not limited herein.

The easy-break groove 2 may have an annular or arc shape, which is not limited herein. That is, an axis of the easy-break groove 2 is arc-shaped or annular.

The second connecting end 4 may be connected to the atomizer C of the electronic cigarette with an interference fit, that is, the second connecting end 4 has a diameter greater than a diameter of the atomizer C and is configured to be located inside the atomizer C to achieve the interference fit. Optionally, the second connecting end 4 may be connected to the atomizer C in other manners, such as clamping connection, which is not limited herein. An end edge, connected to the second connecting end 4, of the first connecting end is provided with an annular protruding stopping portion 3, and the stopping portion 3 is configured to prevent the second connecting end 4 from being excessively inserted into the atomizer C.

Based on the connector B in the above embodiments, an electronic cigarette is further provided according to the present application. The electronic cigarette includes an atomizer C and a battery rod A detachably connected to the atomizer C. The atomizer C includes the connector B according to any one of the above embodiments. In this embodiment, the second connecting end 4 of the connector B is fixed on the atomizer C and electrically connected to an electric heating wire inside the atomizer C. The battery rod A is provided with an insertion groove 6 corresponding to the first connecting end 1, and a guide groove 7 and a retaining groove 8 both corresponding to the retaining portion 11. During assembling, the retaining portion 11 of the second connecting end 4 of the atomizer is inserted along the guide groove 7 by a preset distance, then the atomizer is rotated to move the retaining portion 11 into the retaining groove 8 to be clamped, thus the atomizer C and the battery rod A are reliably connected, and the electric heating wire is electrically connected to a battery in the battery rod A via the connector B. It is appreciated that, the first connecting end 1 of the connector 6 may be fixed on the battery rod A, and the insertion groove 6 is arranged on the atomizer C. Rest parts of the atomizer C and the battery rod A are the same as that in the conventional technology, which will not be described herein.

An atomizer is further provided according to the present application, which is configured to form an electronic cigarette in combination with a battery rod A. One end of the atomizer is provided with a connector configured to be connected to the battery rod A. The connector is the connector according to any one of the above embodiments. Since the connector has the above technical effects, the atomizer also has corresponding technical effects, which is not limited herein.

The above embodiments are described in a progressive manner. Each of the embodiments is mainly focused on describing its differences from other embodiments, and references may be made among these embodiments with respect to the same or similar sections among these embodiments.

Based on the above description of the disclosed embodiments, the person skilled in the art can carry out or use the present application. It is obvious for the person skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A connector of an electronic cigarette, comprising a first connecting end (1) configured to be fixedly connected to a battery rod of the electronic cigarette, and a second connecting end (4) configured to be fixedly connected to an atomizer of the electronic cigarette, wherein the first connecting end (1) is configured to be detachably connected to the battery rod, and an easy-break groove (2) is provided at a connecting portion of the first connecting end (1) and the second connecting end (2) along a circumferential direction of the connector.

2. The connector of the electronic cigarette according to claim 1, wherein the easy-break groove (2) is provided on an outer wall of the connecting portion of the first connecting end (1) and the second connecting end (2).

3. The connector of the electronic cigarette according to claim 2, wherein the connector is provided with a through hole (5) extending along an axial direction of the connector and extending through the first connecting end (1) and the second connecting end (4).

4. The connector of the electronic cigarette according to claim 3, wherein a bottom wall of the easy-break groove (2) is provided with a through hole (21) in communication with the through hole (5).

5. The connector of the electronic cigarette according to claim 3, wherein a bottom wall of the easy-break groove (2) has a thickness ranging from 0.08mm to 0.12mm.

6. The connector of the electronic cigarette according to claim 1, wherein the connector is provided with a through hole (5) extending along an axial direction of the connector and extending through the first connecting end (1) and the second connecting end (4), and an inner wall of the connecting portion of the second connecting end (4) and the first connecting end (1) is provided with a protruding annular end wall, and the easy-break groove (2) is provided on the end wall.

7. The connector of the electronic cigarette according to claim 6, wherein the easy-break groove (2) is provided on a side of the end wall that is away from the first connecting end (1).

8. The connector of the electronic cigarette according to claim 1, wherein the easy-break groove (2) has an annular shape or an arc shape.

9. An atomizer, configured to form an electronic cigarette in combination with a battery rod, wherein one end of the atomizer is provided with a connector configured to be connected to the battery rod, and the connector is the connector according to any one of claims 1 to 8.

10. An electronic cigarette, comprising an atomizer and a battery rod detachably connected to the atomizer, wherein the atomizer and the battery rod are connected via the connector according to any one of claims 1 to 8.
